# EUROPÄISCHE PATENTSCHRIFT

(11) **EP 1 537 316 B1**
(45) Veröffentlichungstag und Bekanntmachung des Hinweises auf die Patenterteilung: **30.04.2008**
(21) Anmeldenummer: 03757808.5
(22) Anmeldetag: 09.09.2003
(51) Int. Cl.: F02D 41/06, F02D 41/34

(54) **VERFAHREN ZUM BETRIEB EINER BRENNKRAFTMASCHINE MIT KRAFTSTOFFDIREKTEINSPRITZUNG**
METHOD FOR OPERATING AN INTERNAL COMBUSTION ENGINE WITH DIRECT FUEL INJECTION
PROCEDE POUR FAIRE FONCTIONNER UN MOTEUR A COMBUSTION INTERNE A INJECTION DIRECTE DE CARBURANT

(30) Priorität: 12.09.2002 DE 10242227
(43) Veröffentlichungstag der Anmeldung: 08.06.2005
(73) Patentinhaber: Daimler AG, 70327 Stuttgart (DE)
(72) Erfinder: ALTENSCHMIDT, Frank, 88400 Biberach (DE)
(86) Internationale Anmeldenummer: PCT/EP2003/009988
(87) Internationale Veröffentlichungsnummer: WO 2004/027239

(56) Entgegenhaltungen:
- WO-A-01/34961
- WO-A-99/67526
- DE-C- 19 823 280
- US-A- 5 482 017

## Beschreibung

Die Erfindung betrifft ein Verfahren zum Betrieb einer Brennkraftmaschine mit Kraftstoffdirekteinspritzung mit den Merkmalen des Oberbegriffs des Anspruchs 1.

Während einer Startphase einer fremdgezündeten Fremdkraftmaschine mit Kraftstoffdirekteinspritzung werden insbesondere bei einem Kaltstart große Mengen an unverbrannten Kraftstoffanteilen produziert, da die Brennraumtemperatur der Brennkraftmaschine während einer Kaltstartphase niedrig ist. Daher kann eine ausreichende Verdampfung des eingespritzten Kraftstoffes nicht stattfinden. Aufgrund der niedrigen Zylinderwandtemperatur lagern sich einige Kraftstoffanteile an der Zylinderwand der Brennkraftmaschine an und nehmen an der Verbrennung nicht teil.

Aus der Patentschrift US 54 82 017 ist ein Verfahren zum Betrieb einer fremdgezündeten Brennkraftmaschine mit Kraftstoffdirekteinspritzung bekannt, bei dem während einer Startphase beim ersten Verbrennungszyklus eine Kraftstoffmenge eingespritzt wird, welche größer als die benötigte Kraftstoffmenge ist, um die an der Zylinderwand angelagerten Kraftstoffanteile auszugleichen. Dadurch wird eine zuverlässige Zündung des gebildeten Kraftstoffluftgemisches erzielt. Bei den darauf folgenden Verbrennungszyklen wird ein mageres Kraftstoff/Luft-Gemisch im Brennraum gebildet, welches früher gezündet wird, um die Brennraumtemperatur bzw. die Zylinderwandtemperatur zu erhöhen. Um eine nachgeschaltete Abgasbehandlungseinrichtung zu erwärmen, wird dann bei den darauf folgenden Verbrennungszyklen eine Teilung der Kraftstoffmenge in einer frühen und einer späten Einspritzung und eine spätere Zündung des gebildeten Kraftstoff/Luft-Gemischs vorgenommen.

Die Offenlegungsschrift WO 99/67526 offenbart ein Verfahren zum Betrieb einer fremdgezündeten Brennkraftmaschine mit Kraftstoffdirekteinspritzung, bei dem der Druck des in den Brennraum eingespritzten Kraftstoffes ermittelt wird, so dass der Kraftstoff während der Ansaugphase der Brennkraftmaschine dann eingespritzt wird, wenn der Kraftstoffdruck kleiner ist als ein vorgegebener Minimaldruck. Dabei ist ein Drucksensor vorgesehen, mit dem der Druck des in den Brennraum eingespritzten Kraftstoffes vor dem Eintritt in den Brennraum gemessen wird. Beim Überschreiten eines Minimaldruckes wird die Brennkraftmaschine während der Startphase in einem Schichtbetrieb und beim Unterschreiten des Minimaldruckes in einem Homogenbetrieb betrieben.

Aus der Patentschrift DE 198 232 80 C1 ist ein Verfahren zum Betrieb einer direkteinspritzenden Brennkraftmaschine während der Startphase bekannt, bei dem in Abhängigkeit von einer Kühlmitteltemperatur zwischen einem Niederdruckstart mit einem homogenen Gemisch und einem Hochdruckstart mit einem geschichteten Gemisch umgeschaltet wird. Dabei wird ein Hochdruckstart der Brennkraftmaschine eingeleitet, wenn der Druck in einem Kraftstoffdruckspeicher einen vorgegebenen Schwellenwert überschritten hat. Dabei ist der Schwellenwert in Abhängigkeit einer Kühlmitteltemperatur in einem Kennfeld der Steuerungseinrichtung abgelegt.

Mit den oben beschriebenen Verfahren wird beim Startbetrieb einer fremdgezündeten Brennkraftmaschine mit Kraftstoffdirekteinspritzung keine optimale Verbrennung erzielt, da ein Betriebsverhalten der Brennkraftmaschine während der Startphase ohne Zündaussetzer nicht gewährleistet werden kann.

Aufgabe der Erfindung ist es demgegenüber, den Einspritzvorgang während der Startphase derart zu gestalten, dass eine Brennraumwandbenetzung mit Kraftstoff während des Einspritzvorganges verringert und eine zündfähige Gemischwolke im Brennraum der Brennkraftmaschine in der Nähe einer Zündquelle gebildet wird.

Diese Aufgabe wird erfindungsgemäß durch ein Verfahren mit den Merkmalen des Anspruchs 1 gelöst.

Das erfindungsgemäße Verfahren zeichnet sich dadurch aus, dass der Kraftstoffmindestdruck und die Zyklenanzahl beim Start der Brennkraftmaschine in Abhängigkeit von einer Brennraumtemperatur gewählt werden, wobei während des Startbetriebs die Einspritzung des Kraftstoffs in den Brennraum vorzugsweise getaktet stattfindet. Durch die Taktung der eingespritzten Kraftstoffmenge während eines Zyklus wird eine Brennraumwandbenetzung mit dem eingespritzten Kraftstoff minimiert, wodurch die Emissionen insbesondere die unverbrannten Kraftstoffanteile während der Startphase verringert werden. Da ein Hochdruckstart erst dann eingeleitet wird, wenn genügend Kraftstoffdruck vorhanden ist, wird eine verbesserte Zerstäubung des eingespritzten Kraftstoffs gewährleistet. Weiterhin wird ein Druckabfall in der Einspritzvorrichtung während des Hochdruckstarts durch die Taktung der eingespritzten Kraftstoffmenge aufgrund des hohen Kraftstoffmengenbedarfs beim Start der Brennkraftmaschine verhindert.

In einer Ausgestaltung des erfindungsgemäßen Verfahrens wird während des Startbetriebs die Kraftstoffgesamtmenge in bis zu drei Teilmengen in den Brennraum eingebracht, d.h. die Kraftstoffgesamtmenge kann wahlweise in Form von einer, zwei oder drei Teilmengen in den Brennraum eingebracht werden. Durch die Taktung der eingespritzten Kraftstoffmenge wird verhindert, dass bei einem Niederdruckstart aufgrund des niedrigen Kraftstoffsystemdrucks Verbrennungsluft in den Kraftstoffinjektor beziehungsweise in die Kraftstoffverteilerleitung, beispielsweise eine Common-Rail, eindringt. Daher findet unabhängig von der Einspritzstrategie die Einspritzung im Kompressionshub früh genug statt, so dass der Kompressionsdruck den Kraftstoffeinspritzdruck nicht übersteigt. Beim Hochdruckstart kann durch die Taktung der eingespritzten Kraftstoffmenge durch eine Variation der Einspritzzeitpunkte ein Homogen-Start, eine Mischform aus einem Homogen- und Schichtstart oder ein reiner Schichtstart erzielt werden.

Gemäß einer weiteren Ausgestaltung der Erfindung werden bei einem Niederdruckstart bis zu drei Teilmengen vor dem Zündzeitpunkt, und bei einem Hochdruckstart bis zu zwei Teilmengen vor und eine Teilmenge nach dem Zündzeitpunkt in den Brennraum eingespritzt. Da beim Niederdruckstart die Einspritzung der Teilmengen, es können eine, zwei oder drei Teilmengen sein, vor dem Zündzeitpunkt abgeschlossen ist, werden hohe HC-Emissionen verhindert und eine zuverlässige Verbrennung der gesamten Kraftstoffmenge sichergestellt.

In einer weiteren Ausgestaltung der Erfindung wird der Zündzeitpunkt während des Startbetriebs der Brennkraftmaschine in Abhängigkeit von der Brennraumtemperatur und einer Differenz zwischen einer Ist-Drehzahl und einer Leerlauf-Drehzahl geregelt. Durch die Abhängigkeit des Zündzeitpunkts von der Brennraumtemperatur wird sichergestellt, dass eine Erhöhung der Brennraumtemperatur in den ersten Zyklen erzielt wird.

Gemäß einer weiteren Ausgestaltung der Erfindung wird während eines Hochdruckstarts bei Unterschreitung eines definierten Kraftstoffmindestdrucks in der Einspritzvorrichtung auf den Niederdruckstart umgeschaltet. Hierdurch werden definierte Druckverhältnisse geschaffen, die eine kontrollierte Kraftstoffzumessung ermöglichen. Dadurch wird sichergestellt, dass keine Wandbenetzung durch den spät eingespritzten Kraftstoff stattfindet.

In einer weiteren Ausgestaltung der Erfindung wird die Brennraumtemperatur mittels einer Temperaturmesseinrichtung am Brennraum oder anhand einer Kühlmitteltemperatur der Brennkraftmaschine erfaßt. Vorzugsweise wird eine Temperatursonde im Brennraumbereich am Zylinderkopf angebracht. Alternativ dient eine Kühlmitteltemperatur als eine Bezugsgröße für die Ermittlung der Brennraumtemperatur, wobei die Temperatur der angesaugten Luftmasse zusätzlich oder alternativ zur Kühlmitteltemperatur als eine weitere Bezugsgröße für die Ermittlung der Brennraumtemperatur verwendet werden kann.

Gemäß einer weiteren Ausgestaltung der Erfindung erfolgt bei einer Kühlmitteltemperatur kleiner als -15°C oder größer als 90°C ein Niederdruckstart, wobei bei einem in der Einspritzvorrichtung aufgebauten Kraftstoffmindestdruck von mindestes 10 bar und bei einer Kühlmitteltemperatur zwischen -15°C und 90°C ein Hochdruckstart stattfindet. Bei einem Kraftstoffdruck von mindestens 10 bar wird eine gute Sprayqualität des eingespritzten Kraftstoffes gewährleistet und eine Verdampfung des eingespritzten Kraftstoffs erzielt, ohne daß es zu einer Wandanlagerung kommt. Dabei wird ein Niederdruckstart wird bei Temperaturen größer als 90°C bevorzugt, da durch hohe Temperaturen im Brennraum oftmals während eines Wiederstartbetriebs der Brennkraftmaschine aufgrund der zunehmenden Spaltmasse in der Kraftstoffpumpe kein ausreichender Kraftstoffdruck aufgebaut werden kann. Vorzugsweise findet der Niederdruckstart in einem Temperaturbereich kleiner als -30°C oder größer als 110°C, und der Hochdruckstart zwischen -30°C und 110°C statt.

Weitere Merkmale und Merkmalskombinationen ergeben sich aus der Beschreibung. Konkrete Ausführungsbeispiele der Erfindung sind in den Zeichnungen vereinfacht dargestellt und in der nachfolgenden Beschreibung näher erläutert. Es zeigen:
- Fig. 1: einen Zylinderquerschnitt einer direkt einspritzenden Brennkraftmaschine mit Fremdzündung,
- Fig. 2: ein schematisches Diagramm des Einspritzverlaufs der Brennkraftmaschine gemäß Fig.1 während eines Niederdruckstarts aufgetragen über dem Kurbelwinkel, und
- Fig. 3: ein schematisches Diagramm des Einspritzverlaufs der Brennkraftmaschine gemäß Fig.1 während eines Hochdruckstarts aufgetragen über dem Kurbelwinkel.

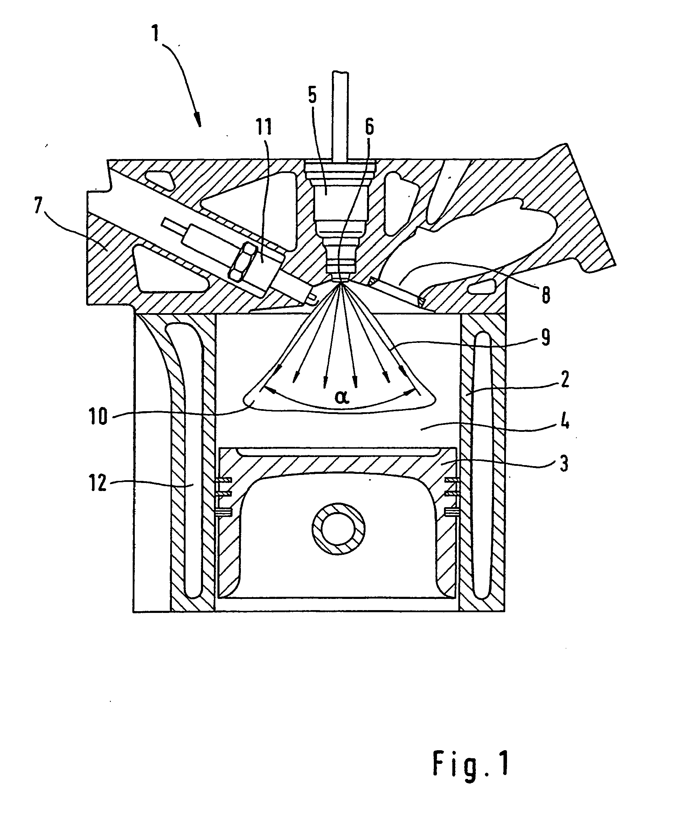

Figur 1 zeigt einen Zylinder 2 einer direkt einspritzenden Brennkraftmaschine 1, in dem ein längs beweglich angeordneter Kolben 3 mit einem dem Zylinder 2 verschließenden Zylinderkopf 7 einen Brennraum 4 begrenzt. Im Zylinderkopf 7 ist ein Kraftstoffinjektor 5 angeordnet, bei dem durch eine Düsenöffnung 6 Kraftstoff in den Brennraum 4 in Form eines Kraftstoffkegels 9 eingespritzt wird. Eine nicht dargestellte Steuereinrichtung bestimmt bei der Brennkraftmaschine 1 während einer Startphase durch einen ermittelten Kraftstoffdruck in einer nicht dargestellten Einspritzvorrichtung, ob beim Start der Brennkraftmaschine 1 ein Hochdruckstart oder ein Niederdruckstart eingeleitet wird. Bei der Freigabe der Düsenöffnung 6 wird der Kraftstoff in einem Kegelstrahl 9 in den Brennraum 4 derart eingespritzt, daß die im Zylinderkopf 7 angeordnete Zündkerze 11 im wesentlichen nicht benetzt wird. Dabei wird der Kraftstoffstrahl 9 in den Brennraum mit einem Öffnungswinkel α eingebracht, der vorzugsweise in einem Bereich zwischen 70° und 110° liegt. Die in Figur 1 dargestellte Brennkraftmaschine 1 arbeitet nach dem Viertaktprinzip, wobei sich das erfindungsgemäße Verfahren ebenfalls für fremdgezündete Zweitaktbrennkraftmaschinen mit Direkteinspritzung eignet.

Im ersten Takt eines Arbeitspiels nach dem Viertakt-Prinzip arbeitender Brennkraftmaschine aus Fig. 1 wird dem Brennraum 4 durch einen Einlaßkanal 8 Verbrennungsluft zugeführt, wobei der Kolben 3 sich in einer Abwärtsbewegung bis zu einem unteren Totpunkt UT bewegt. In einem weiteren Kompressionstakt bewegt sich der Kolben 3 in einer Aufwärtsbewegung vom unteren Totpunkt UT bis zu einem oberen Zündtotpunkt ZOT. Im Bereich des oberen Zündtotpunkts ZOT wird mittels der Zündkerze 11 das gebildete Kraftstoff/Luft-Gemisch gezündet, wobei der Kolben 3 in einer Abwärtsbewegung bis zu einem unteren Totpunkt UT expandiert. In einem letzten Takt fährt der Kolben 3 in einem Aufwärtsbewegung bis zu einem oberen Totpunkt OT und schiebt die Abgase aus dem Brennraum 4 aus.

Abhängig von einer in einem Kühlwasserkanal 12 gemessene Kühlwassertemperatur wird mittels einer nicht dargestellten Steuereinrichtung festgelegt, ob eine Hochdruck- oder ein Niederdruckstart während der Startphase der Brennkraftmaschine durchgeführt wird. Ein Hochdruckstart wird dann eingeleitet, wenn ein Kraftstoffmindestdruck in einer nicht dargestellten Kraftstoffverteilerleitung vorliegt, die beispielsweise als Kraftstoff-Common-Rail ausgebildet ist. Der Kraftstoffmindestdruck wird in Abhängigkeit von der ermittelten Kühlwassertemperatur festgelegt. Dieser beträgt vorzugsweise mindestens 10 bar. Bei einem solchen Kraftstoffdruck ist sichergestellt, dass eine gute Zerstäubungsqualität erzielt wird. Der Kraftstoffmindestdruck muss wiederum nach einer definierten Anzahl von Verbrennungszyklen aufgebaut sein. Gemäß dem vorliegenden Ausführungsbeispiel wird ein Zyklus als ein Vorgang vom ersten bis zum vierten Takt gemäß der oben dargestellten Viertaktfolge verstanden. Vorzugsweise soll der Kraftstoffmindestdruck nach ungefähr vier Sekunden aufgebaut sein. Dabei wird die Anzahl der Verbrennungszyklen in Anhängigkeit von der Kühlwassertemperatur festgelegt.

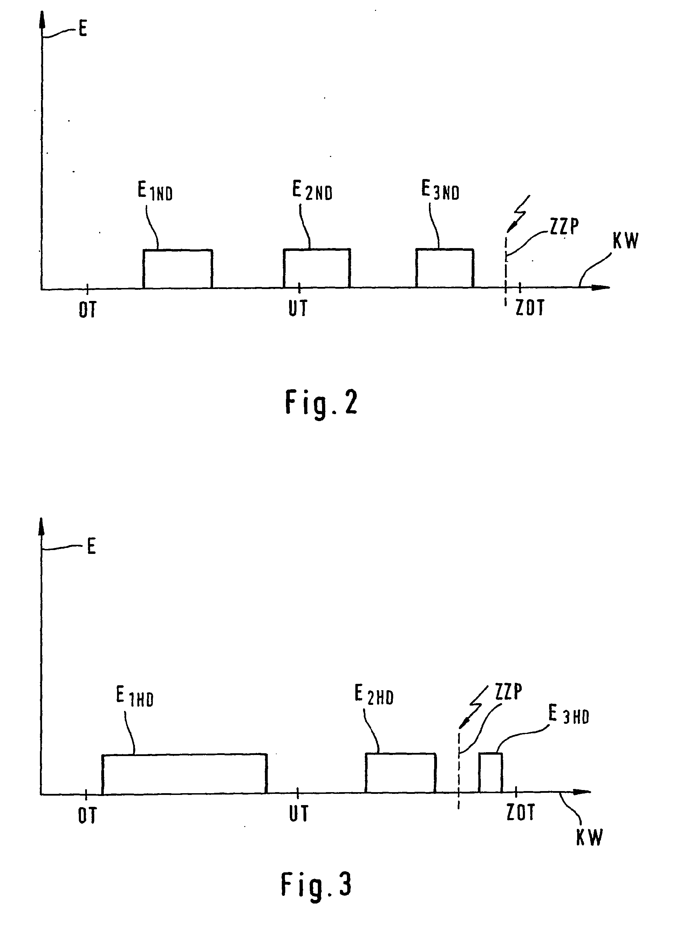

Erreicht der Kraftstoffdruck nach einer definierten Anzahl von Zyklen nicht den Kraftstoffmindestdruck, so wird ein Niederdruckstart eingeleitet. Gemäß Figur 2 wird die Kraftstoffmenge in bis zu drei Teilmengen in den Brennraum vor dem Zündzeitpunkt ZZP eingebracht. Die Aufteilung der Kraftstoffmenge ermöglicht eine bessere Verteilung des eingespritzten Kraftstoffs im Brennraum 4 und entlastet das Kraftstoffsystem. Die erste Teilmenge E1_{ND} wird während der Ansaugphase in den Brennraum 4 eingebracht. Die zweite Teilmenge E2_{ND} erfolgt in einem Bereich zwischen einem Endteil der Ansaugphase und einem Anfangsteil der Kompressionsphase. Die dritte Teilmenge E3_{ND} erfolgt dann kurz vor dem Zündzeitpunkt ZZP, so dass im Bereich der Zündkerze 11 eine zündfähige Gemischwolke vorliegt. Die in Fig. 2 gezeigten Einspritzzeitpunkte sind schematisch dargestellt; sie sind frei wählbar, wobei sie in Abhängigkeit von einer Ist-Drehzahl, und/oder einer Kühlwassertemperatur variiert werden.

Das Ende der Kraftstoffeinspritzungen E1_{ND}, E2_{ND} und E3_{ND} wird über drei Kennfelder festgelegt. Die Kennfelder sind jeweils über die Kühlwassertemperatur und die Zyklenanzahl aufgespannt. Dabei wird die Kraftstoffeinspritzung derart gestaltet, dass Überschneidungen von Kraftstoffeinspritzungen verhindert werden. Daher ist es denkbar, das Ende der dritten Einspritzung E3_{ND} und die zwei vorangegangenen Einspritzungen E1_{ND} und E2_{ND} über Verzugszeiten oder Differenzwinkel festzulegen. Während des Niederdruckstarts wird aufgrund des niedrigen Kraftstoffdrucks die Einspritzdauer der letzten Einspritzung E3_{ND} begrenzt, um den Eintritt von Kraftstoff und Luft in den Injektor zu verhindern. Dabei wird mittels einer Druckkompensation sichergestellt, dass zu jeder Zeit die richtige Einspritzzeit eingestellt wird. Beim Niederdruckstart wird vorzugsweise ein Druckregler in der Einspritzvorrichtung offen gehalten, um definierte Druckverhältnisse in der Kraftstoffverteilerleitung der Einspritzvorrichtung zu erzielen. Die in Figur 2 dargestellten Einspritzzeiten der drei Teilmengen sind nur als Beispiel dargestellt, wobei die Einspritzzeiten frei wählbar sind, und in Abhängigkeit vom Kraftstoffdruck in der Einspritzvorrichtung variiert werden. Grundsätzlich findet bei einer Kühlmitteltemperatur kleiner als -15° C oder größer als 90° C ein Niederdruckstart statt.

Ist der Kraftstoffmindestdruck nach der definierten Anzahl von Zyklen erreicht, so wird ein Hochdruckstart eingeleitet.

Bei einem eingeleiteten Hochdruckstart wird das Einspritztiming über dem Einspritzende definiert. Auf diese Weise wird ein direkter Bezug zur Zündung hergestellt und somit eine einfache Regelung der Kraftstoffeinspritzung erzielt. Gemäß Figur 3 erfolgt beim Hochdruckstart die Einspritzung des Kraftstoffes in bis zu drei Teilmengen E1_{HD}, E2_{HD} und E3_{HD}. Die erste Teilmenge E1_{HD} wird während der Ansaugphase eingespritzt. Die Aufteilung der Kraftstoffmasse wird anhand in der Steuereinheit abgelegten Kennfeldern festgelegt, in denen über der Kühlwassertemperatur, einer Ist-Drehzahl und einer Leerlaufdrehzahl das Ende der ersten Einspritzung E1_{HD} unabhängig vom Zündzeitpunkt ZZP festgelegt wird. Die zweite Kraftstoffeinspritzung E2_{HD} erfolgt während der Kompressionsphase derart, dass der Abstand zwischen dem Ende der zweiten Kraftstoffeinspritzung E2_{HD} und dem Zündzeitpunkt ZZP in Abhängigkeit von der Kühlwassertemperatur, der Ist-Drehzahl und der Leerlaufdrehzahl festgelegt wird. Die dritte Kraftstoffeinspritzung E3_{HD} erfolgt kurz nach dem Zündzeitpunkt ZZP, wobei die dritte Kraftstoffeinspritzung E3_{HD} über eine Verzögerungszeit zwischen der zweiten und der dritten Kraftstoffeinspritzung E3_{HD} derart festgelegt wird, dass sie an der Verbrennung teilnimmt. Es ist denkbar, dass beim Hochdruckstart nur eine einzige Kraftstoffeinspritzung vorgenommen wird, die Vorteilhafterweise dann in einem Bereich von 40°KW bis 160°KW vor ZOT stattfindet.

Dementsprechend wird beim Hochdruckstart eine kombinierte Brennraumladung aus Homogen- und Schichtladung erzielt. Die erste Kraftstoffteilmenge stellt den homogenen Anteil, die zweite und die dritte den geschichteten Anteil dar. Dadurch werden Kraftstoffwandanlagerungen minimiert und eine sichere Zündung der gebildeten Kraftstoffwolke erzielt. Vorzugsweise wird mittels einer Druckkompensation in der Kraftstoffeinspritzvorrichtung sichergestellt, daß zu jeder Zeit während der Startphase die richtige Einspritzzeit gewählt wird.

Mit der beschriebenen Mehrfacheinspritzung während der Startphase wird das Betriebsverhalten der Brennkraftmaschine 1 verbessert, wobei insbesondere die Emissionsbildung durch die unverbrannten Kraftstoffanteile aufgrund einer niedrigen Wandtemperatur minimiert wird. Diese Vorteile ergeben sich vorzugsweise beim Einsatz eines Piezo-Injektors, bei dem kurze Einspritzzeiten, beispielsweise weniger als 0,25 msec erzielt werden können. Dadurch wird die Einspritzung von sehr kleinen Kraftstoffteilmengen in den Brennraum 4 ermöglicht, und für den Startbetrieb der Brennkraftmaschine 1 die benötigte Kraftstoffmenge stark reduziert.

Während der Startphase wird der Zündzeitpunkt ZZP sowohl beim Nieder- als auch beim Hochdruckstart in Abhängigkeit von der Kühlwassertemperatur und der Motordrehzahl mittels der Steuereinheit geregelt. Dabei wird der Zündzeitpunkt ZZP in einem Kennfeld abgelegt, in dem der Zündzeitpunkt ZZP über der Kühlwassertemperatur, der Differenz zwischen der Ist-Drehzahl und der Leerlauf-Drehzahl aufgetragen ist. Nach Verlassen der Startphase wird der Zündzeitpunkt ZZP dem normalen Betriebszustand angeglichen. Die in der Steuereinheit applizierten Zündzeitpunkte werden für den Niederdruck- und Hochdruckstart in getrennten Kennfeldern abgelegt.

Insbesondere eignet sind das erfindungsgemäße Verfahren für den Einsatz bei direkteinspritzenden Brennkraftmaschinen mit Fremdzündung, bei denen ein strahlgeführtes Brennverfahren vorliegt. Bei solchen Brennkraftmaschinen werden nach außen öffnende Einspritzdüsen verwendet, bei denen der Kraftstoff als Hohlkegel in den Brennraum eingespritzt wird. Vorzugsweise wird der Kraftstoff als ein Kraftstoffhohlkegel mit einem Winkel α zwischen 70° und 100° in den Brennraum eingebracht, so dass der Kraftstoffhohlkegel bei einer Kraftstoffeinspritzung im Kompressionstakt auf im Brennraum komprimierte Verbrennungsluft trifft. Ein torusförmiger Wirbel wird dadurch im Außenbereich bzw. am Rand des eingespritzten Kraftstoffhohlkegels gebildet, womit im Bereich der Elektroden der Zündkerze ein zündfähiges Kraftstoff/Luft-Gemisch bereitgestellt wird. Dabei erfolgt die Anordnung der Zündkerze derart, dass die Elektroden der Zündkerze 11 in den erzielten Randwirbel hineinragen, ohne dass sie während der Kraftstoffeinspritzung wesentlich benetzt werden, d.h. bei einer leichten bzw. geringfügigen Benetzung der Elektroden der Zündkerze sollte bis zum Zündzeitpunkt der größte Anteil des Kraftstoffes an den Elektroden wieder verdampft sein.

## Patentansprüche

1. Verfahren zum Betrieb einer Brennkraftmaschine mit einer Einspritzvorrichtung, bei dem
- über einen Einlasskanal einem Brennraum Verbrennungsluft zugeführt wird,
- mittels einer im Brennraum angeordneten Kraftstoffdüse Kraftstoff in den Brennraum eingespritzt wird,
- mittels einer im Brennraum angeordneten Zündkerze ein gebildetes Kraftstoff/Luft-Gemisch bei einem bestimmten Zündzeitpunkt gezündet wird, und
- beim Start der Brennkraftmaschine ein Hoch- oder ein Niederdruckstart in Abhängigkeit von einem in der Einspritzvorrichtung innerhalb einer definierten Zyklenanzahl aufgebauten Kraftstoffdrucks im Vergleich zu einem Kraftstoffmindestdruck gewählt wird,
**dadurch gekennzeichnet, dass**
- der Kraftstoffmindestdruck und die Zyklenanzahl in Abhängigkeit von einer Brennraumtemperatur gewählt werden, wobei
- während des Startbetriebs die Einspritzung des Kraftstoffs in den Brennraum getaktet stattfindet, wobei ein Hochdruckstart erst dann eingeleitet wird, wenn genügend Kraftstoffdruck vorhanden ist.

2. Verfahren nach Anspruch 1,
**dadurch gekennzeichnet, dass**
während des Startbetriebs die eingespritzte Kraftstoffgesamtmenge in bis zu drei Teilmengen in den Brennraum eingebracht wird.

3. Verfahren nach Anspruch 2,
**dadurch gekennzeichnet, dass**
bei einem Niederdruckstart die bis zu drei Teilmengen vor dem Zündzeitpunkt, und bei einem Hochdruckstart die bis zu zwei Teilmengen vor und eine Teilmenge nach dem Zündzeitpunkt in den Brennraum eingespritzt werden.

4. Verfahren nach einem der vorgehenden Ansprüche,
**dadurch gekennzeichnet, dass**
der Zündzeitpunkt während des Startbetriebs in Abhängigkeit von der Brennraumraumtemperatur und einer Differenz zwischen einer Ist-Drehzahl und einer Leerlaufdrehzahl bestimmt wird.

5. Verfahren nach einem der vorhergehenden Ansprüche,
**dadurch gekennzeichnet, dass**
während eines Hochdruckstarts bei Unterschreitung eines definierten Kraftstoffmindestdrucks in der Einspritzvorrichtung auf den Niederdruckstart umgeschaltet wird.

6. Verfahren nach einem der vorhergehenden Ansprüche,
**dadurch gekennzeichnet, dass**
die Brennraumtemperatur mittels einer Temperaturmesseinrichtung am Brennraum oder anhand einer Kühlmitteltemperatur der Brennkraftmaschine erfasst wird.

7. Verfahren nach einem der vorhergehenden Ansprüche,
**dadurch gekennzeichnet, dass**
ein Niederdruckstart bei einer Kühlmitteltemperatur kleiner als -15°C oder größer als 90°C erfolgt, wobei bei einem in der Einspritzvorrichtung aufgebauten Kraftstoffmindestdruck von mindestens 10 bar und bei einer Kühlmitteltemperatur zwischen -15°C und 90°C ein Hochdruckstart erfolgt.

## Claims

1. Method for operating an internal combustion engine with an injection device, in which
- combustion air is delivered through an inlet duct to a combustion chamber,
- fuel is injected into the combustion chamber by means of a fuel nozzle arranged in the combustion chamber,
- a fuel/air mixture formed in the combustion chamber is ignited by a spark-plug at a defined ignition time, and
- when the internal combustion engine is started, a high-pressure start or a low-pressure start is selected as a function of a fuel pressure built up in the injection device within a defined number of cycles compared with a minimum fuel pressure,
**characterised in that**
- the said minimum fuel pressure and the said number of cycles are chosen as a function of a combustion chamber temperature, and
- during the starting operation fuel is injected into the combustion chamber in a timed manner, such that a high-pressure start is only initiated when the fuel pressure is sufficient.

2. Method according to Claim I,
**characterised in that**
during starting operations the total quantity of fuel injected is introduced into the combustion chamber in up to three part-quantities.

3. Method according to Claim 2,
**characterised in that**
during a low-pressure start the up to three part-quantities are injected into the combustion chamber before the ignition time, and during a high-pressure start up to two part-quantities are injected before the ignition time and one part-quantity after the ignition time.

4. Method according to any of the preceding claims,
**characterised in that**
during starting operations the ignition time is determined as a function of the combustion chamber temperature and a difference between an actual engine speed and an idling speed.

5. Method according to any of the preceding claims,
**characterised in that**
during a high-pressure start, if the fuel pressure in the injection device falls below a defined minimum value the system changes over to the low-pressure start mode.

6. Method according to any of the preceding claims,
**characterised in that**
the combustion chamber temperature is determined by a temperature measurement device on the combustion chamber, or with reference to a coolant temperature of the internal combustion engine.

7. Method according to any of the preceding claims,
**characterised in that**
a low-pressure start takes place at a coolant temperature lower that -15°C or higher than 90°C, whereas if the minimum fuel pressure built up in the injection device is at least 10 bar and the coolant temperature is between -15°C and 90°C a high-pressure start takes place.

## Revendications

1. Procédé pour faire fonctionner un moteur à combustion interne avec un dispositif d'injection, dans lequel
- de l'air comburant est admis dans une chambre de combustion via un canal d'entrée,
- du carburant est injecté dans la chambre de combustion au moyen d'une buse à carburant agencée dans la chambre de combustion,
- un mélange carburant/air constitué est allumé à un instant d'allumage déterminé au moyen d'une bougie d'allumage agencée dans la chambre de combustion, et
- lors du démarrage du moteur à combustion interne, on choisit un démarrage à haute pression ou un démarrage à basse pression en dépendance d'une pression de carburant qui s'établit dans le dispositif d'injection à l'intérieur d'un nombre de cycles défini par comparaison à une pression minimum de carburant,
**caractérisé en ce que**
- la pression minimum de carburant et le nombre de cycles sont choisis en fonction d'une température de la chambre de combustion, et
- pendant le fonctionnement en démarrage l'injection du carburant dans la chambre de combustion a lieu de façon cadencée, et un démarrage à haute pression n'est amorcé que lorsqu'une pression suffisante du carburant se présente.

2. Procédé selon la revendication 1,
**caractérisé en ce que**, pendant le fonctionnement en démarrage, la quantité totale de carburant injecté est introduite dans la chambre de combustion en quantités partielles, allant jusqu'au nombre de trois.

3. Procédé selon la revendication 2,
**caractérisé en ce que** lors d'un démarrage à basse pression les quantités partielles, allant jusqu'au nombre de trois, sont injectées dans la chambre de combustion avant l'instant d'allumage, et lors d'un démarrage à haute pression, jusqu'à deux quantités partielles sont injectées dans la chambre de combustion avant et une quantité partielle est injectée après l'instant d'allumage.

4. Procédé selon l'une des revendications précédentes,
**caractérisé en ce que** l'instant d'allumage est déterminé, pendant le fonctionnement en démarrage, en dépendance de la température dans la chambre de combustion et d'une différence entre la vitesse de rotation réelle et une vitesse de rotation à vide.

5. Procédé selon l'une des revendications précédentes,
**caractérisé en ce que**, pendant un démarrage à haute pression, lors du passage au-dessous d'une pression minimum définie du carburant dans le dispositif d'injection, on commute vers le démarrage à basse pression.

6. Procédé selon l'une des revendications précédentes,
**caractérisé en ce que** la température de la chambre de combustion est détectée au moyen d'un dispositif de mesure de température au niveau de la chambre de combustion, ou à l'aide d'une température du fluide de refroidissement du moteur à combustion interne.

7. Procédé selon l'une des revendications précédentes,
**caractérisé en ce qu'**un démarrage à basse pression a lieu pour une température du fluide de refroidissement plus basse que - 15° C ou plus haute que 90° C, et lorsqu'une pression minimum de carburant s'est établie dans le dispositif d'injection à au moins 10 bars et pour une température du fluide de refroidissement entre - 15° C et + 90° C, a lieu un démarrage à haute pression.
